# FASCICULE DE BREVET EUROPEEN

(11) **EP 1 810 390 B1**
(45) Date de publication et mention de la délivrance du brevet: **05.03.2008**
(21) Numéro de dépôt: 05784028.2
(22) Date de dépôt: 30.06.2005
(51) Int. Cl.: H02K 11/00, H01H 85/00, H01H 85/044

(54) **CIRCUIT D'ALIMENTATION D'UN BALAI D'UN MOTEUR ELECTRIQUE, NOTAMMENT D'UN DEMARREUR DE VEHICULE AUTOMOBILE**
VERSORGUNGSSCHALTUNG FÜR EINE ELEKTROMOTORBÜRSTE INSBESONDERE EINES KRAFTFAHRZEUG-ANLASSERS
POWERING CIRCUIT FOR AN ELECTRIC MOTOR BRUSH, IN PARTICULAR OF A MOTOR VEHICLE STARTER

(30) Priorité: 30.06.2004 FR 0407263
(43) Date de publication de la demande: 25.07.2007
(73) Titulaire: VALEO EQUIPEMENTS ELECTRIQUES MOTEUR, 94017 Créteil-Cedex (FR)
(72) Inventeur: CHORIER, Jacques, F-38090 Roche (FR); METRAL, Jean-Sébastien, F-38290 La Verpillière (FR)
(74) Mandataire: de Lambilly Delorme, Marie Pierre
(86) Numéro de dépôt international: PCT/FR2005/001661
(87) Numéro de publication internationale: WO 2006/010862

(56) Documents cités:
- EP-A- 1 261 113
- DE-A1- 2 348 771
- DE-A1- 19 512 113
- FR-A- 2 785 086
- PATENT ABSTRACTS OF JAPAN vol. 2003, no. 09, 3 septembre 2003 (2003-09-03) -& JP 2003 148315 A (DENSO CORP), 21 mai 2003 (2003-05-21)

## Description

### DOMAINE TECHNIQUE DE L'INVENTION

La présente invention concerne un circuit d'alimentation électrique d'un moteur.

L'invention concerne notamment un circuit d'alimentation d'un moteur électrique de démarreur de véhicule automobile équipé de moyens de protection contre la surchauffe.

### ETAT DE LA TECHNIQUE

L'invention concerne plus particulièrement un moteur électrique équipé de moyens de protection contre sa surchauffe du type comportant au moins un coupe-circuit qui est agencé dans le circuit d'alimentation électrique du moteur et dont l'ouverture est commandée en fonction d'un paramètre représentatif de la température de la machine.

L'invention trouve notamment à s'appliquer à un démarreur de véhicule automobile dont il est nécessaire d'assurer la protection contre la surchauffe.

Dans ce cas, le circuit d'alimentation comporte au moins un câble d'alimentation reliant une source de courant, notamment une batterie d'accumulateurs, au contacteur électromagnétique du démarreur, et comporte un câble de raccordement reliant la borne de puissance du contacteur électromagnétique au moteur électrique, notamment à au moins un balai d'alimentation des enroulements du moteur.

En cas de court-circuit ou de blocage mécanique du moteur électrique, il se produit une surchauffe très importante du moteur électrique lui-même et des différents éléments de câblage électrique. Une telle surchauffe peut aboutir à la destruction par fusion d'un élément quelconque du circuit électrique.

Afin de protéger le moteur du démarreur contre un échauffement excessif résultant d'une utilisation prolongée ou d'un fonctionnement anormal, et afin d'améliorer ses performances ainsi que sa fiabilité en évitant la destruction immédiate ou progressive de ses composants, il est connu de prévoir un dispositif de coupure, disposé en série dans le circuit électrique de commande du contacteur du démarreur, qui interrompt l'alimentation électrique de ce dernier lorsque la température du moteur dépasse une valeur prédéterminée.

A cet effet, il a déjà été proposé de disposer un élément sensible à la température du moteur sur ce dernier, ou à l'intérieur de ce dernier le plus près possible d'une zone chaude et notamment du rotor.

Toutefois, l'agencement d'un tel composant formant capteur thermique à proximité du rotor, voire en contact avec l'arbre tournant de ce dernier, est peu aisé et il complique encore davantage la structure du moteur et notamment celle du porte-balais lorsque l'élément sensible à la température est porté par celui-ci.

Le document FR-A-2.717.961 propose une conception des moyens de protection contre la surchauffe qui permet de remédier à ces inconvénients grâce à une machine dans laquelle les moyens de protection comportent un élément électrique chauffant alimenté par le circuit d'alimentation électrique et un capteur thermique associé à l'élément électrique chauffant et qui commande l'interrupteur. L'élément électrique chauffant est agencé en série dans le circuit d'alimentation de la machine.

Un tel coupe-circuit externe, par exemple réalisé sous la forme d'un fusible, est un composant encombrant afin de tenir compte des intensités normalement très importantes nécessaires au fonctionnement du démarreur. Un tel composant, est donc encombrant et difficile à aménager entre la batterie d'accumulateurs et le démarreur, ou sur le démarreur.

Le document FR-A-2.785.086 propose un circuit d'alimentation électrique dans lequel les moyens formant coupe-circuit sont constitués par un tronçon de section réduite déterminée du fil conducteur appartenant au câble d'alimentation de faible longueur d'un des balais d'alimentation de l'induit du moteur.

La valeur de la section réduite déterminée de ce tronçon formant coupe-circuit ou "shunt" en association avec l'intensité du courant d'alimentation qui y circule et le matériau constitutif du fil conducteur (pare exemple du cuivre) ainsi que la température globale de la zone du moteur électrique dans laquelle est situé ce shunt, déterminent les conditions "d'intervention" du coupe-circuit.

### RESUME DE L'INVENTION

L'invention propose un circuit d'alimentation électrique reliant une source de courant, notamment une batterie d'accumulateurs, à au moins un balai d'un moteur électrique, par exemple de démarreur de véhicule automobile, du type comportant :
- au moins un élément conducteur amont en métal découpé de section pleine sensiblement constante sur toute sa longueur et un câble aval relié audit au moins un balai;
- et des moyens formant coupe-circuit comportant un tronçon de section réduite déterminée du fil conducteur appartenant audit câble aval, qui interrompent le circuit par fusion dudit tronçon lorsque le courant est trop important,
caractérisé en ce que ledit élément conducteur amont comporte une portion de section réduite pour réduire les phénomènes de conduction thermique à travers ledit élément conducteur amont.

Ainsi, il est possible de réduire les phénomènes de conduction thermique à travers l'élément conducteur amont, qui est par exemple un "pont" métallique conducteur inter-balais entre les deux balais d'une paire de balais reliés à la tresse du contacteur du démarreur, c'est à dire à la batterie du véhicule dès que la clef de contact est actionnée par l'utilisateur.

L'invention permet ainsi de maîtriser les conditions d'intervention du shunt en évitant une diffusion thermique trop rapide dans les pièces avoisinantes du shunt.

Outre le ralentissement de la conduction thermique par le pont inter-balais, on favorise aussi un échauffement ponctuel et localisé à proximité du shunt par augmentation de la résistance électrique de la portion de section réduite de l'élément conducteur amont.

La solution selon l'invention peut aisément être mise en oeuvre sans modifier des pièces produites industriellement telles que les ensembles balai-shunt.

La solution selon l'invention est beaucoup moins coûteuse qu'une autre solution connue consistant à revêtir le palier arrière avec de la peinture électriquement isolante qui empêche le courant de passer entre le pont inter-balais et le palier par l'intermédiaire de la poussière de balai(s) produite en fonctionnement par l'usure des balais.

Selon d'autres caractéristiques de l'invention :
- la section réduite de ladite portion de l'élément conducteur amont est supérieure à la section réduite déterminée dudit tronçon du fil conducteur du câble aval, afin de garantir que c'est toujours le shunt qui fait fonction de fusible, et non pas la portion de section réduite du conducteur électrique amont ;
- ladite portion de section réduite est adjacente à l'extrémité aval de l'élément conducteur et l'extrémité aval de l'élément conducteur amont est reliée par soudage à l'extrémité amont du fil conducteur du câble aval, de façon à limiter au maximum la conduction thermique et à obtenir un échauffement localisé à proximité du shunt ;
- ladite portion de section réduite de l'élément conducteur amont comporte au moins un évidement pour en réduire la section ;
- ladite portion de section réduite de l'élément conducteur amont comporte au moins un trou pour en réduire la section ;
- ledit élément conducteur amont est une bande de tôle découpée de section rectangulaire, notamment pour constituer un "pont" inter-balais ;
- l'extrémité amont de l'élément conducteur amont est reliée à un autre câble d'alimentation d'un autre balai.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective qui illustre un démarreur selon l'état de la technique ;
- la figure 2 est une vue à grande échelle qui illustre l'agencement connu d'un shunt ou coupe circuit dans le câble d'alimentation d'un balai du moteur électrique de démarreur de la figure 1 ;
- la figure 3 est une vue schématique en plan qui illustre un exemple de réalisation de l'invention pour un ensemble porte-balais d'un moteur électrique de démarreur ;
- la figure 4 est une vue de détail de l'élément conducteur formant pont de raccordement entre deux des balais de la figure 3.

### DESCRIPTION DE MODES DE REALISATION DE L'INVENTION

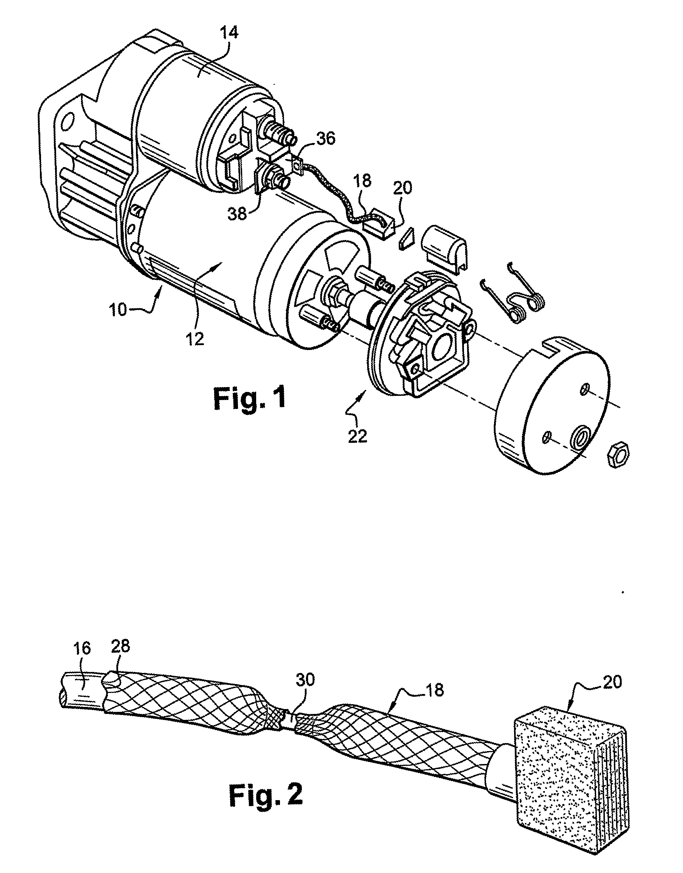

Le démarreur 10 illustré à la figure 1 est composé pour l'essentiel d'un moteur électrique 12 qui, lorsqu'il est alimenté en courant, permet d'entraîner en rotation le lanceur (non représenté) du démarreur, et d'un contacteur 14.

Selon une conception connue, le contacteur 14 a pour fonction d'établir ou d'interrompre l'alimentation en courant électrique du moteur 12 et il consiste en un interrupteur comportant un élément mobile dont les déplacements sont commandés par un actionneur électromagnétique et qui établit ou qui interrompt le passage du courant dans un câble conducteur 18 relié à l'un des balais 20 porté par le porte-balais 22 du moteur électrique 12 du démarreur 10.

Le câble conducteur 18 relie la patte de raccordement électrique 36 portée par la borne de sortie 38 du contacteur 14 au balai ou charbon 20.

Lorsque le conducteur établit le contact au moyen d'un l'interrupteur commandé par la clef de contact, il provoque l'alimentation de la bobine de l'actionneur électromagnétique qui provoque la fermeture de l'interrupteur interne au contacteur 14 qui établit l'alimentation du moteur 12 à travers le conducteur 18 et le balai.

Comme on peut le voir à la figure 2, et conformément par exemple aux enseignements du document FR-A-2.785.086, le câble conducteur 18 d'alimentation du balai 20 constitue un coupe-circuit ou shunt.

A cet effet, le fil conducteur interne 16 agencé à l'intérieur d'une gaine tressée en matériau ininflammable 28, comporte un tronçon 30 de section réduite déterminée.

La section d'aire réduite déterminée du tronçon 30 provoque un accroissement de la résistance linéique par rapport au reste du câble 18 et le passage du courant dans ce tronçon 30 provoque un échauffement localisé plus important.

La réduction de section est déterminée de manière que, en cas de courant d'une intensité anormalement élevée, cette zone ou tronçon 30 fonde avant même que l'échauffement des autres parties du démarreur n'aboutissent à des températures dangereuses, notamment à des températures risquant de provoquer le déclenchement d'un incendie.

En cas de fonctionnement en fusible du tronçon 30 formant coupe-circuit ou shunt, la présence de la gaine ininflammable 28 permet d'éviter toute formation d'étincelles et toute coulure de métal en fusion hors de la gaine 28, en évitant ainsi également l'amorçage d'un incendie éventuel.

Toutefois, un tel shunt peut être mis en oeuvre au moyen d'un câble conducteur comportant seulement un fil conducteur 16, ou une tresse métallique, c'est à dire sans gaine 28.

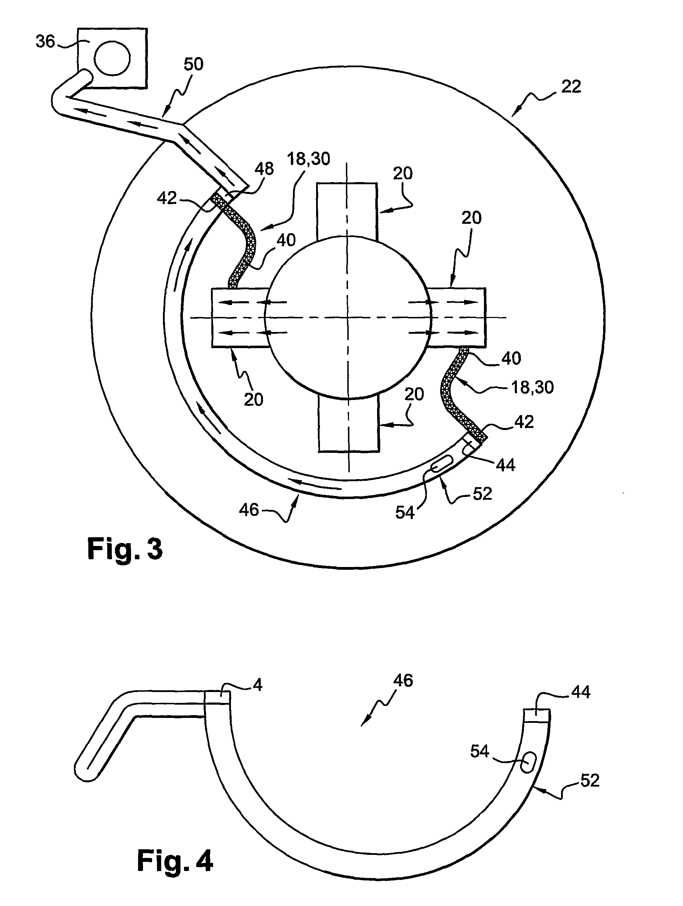

On a représenté schématiquement à la figure 3 une plaque porte-balais 22 qui porte quatre balais 20 dont deux balais 20 dits "positifs" ou "+" appartenant à une paire de balais en série qui sont reliés à la borne 36.

Le balai 18 de droite, en considérant la figure 3 est le balai situé en aval en considérant la circulation du courant.

Le balai aval 20 est relié à l'extrémité aval 40 d'un câble conducteur aval 18, 30 qui est de section réduite déterminée sur toute sa longueur, par exemple égale à 2,5 mm², pour constituer le shunt ou coupe-circuit. En variante la section réduite 30 peut s'étendre que sur une partie du cable 18.

L'extrémité amont 42 du câble conducteur aval 18, 30 est soudée sur la patte d'extrémité aval 44 d'un pont inter-balais 46 qui constitue ici l'élément conducteur amont au sens de l'invention.

Le pont inter-balais 46, représenté en détails à la figure 4, est une pièce en tôle métallique conductrice découpée de section par exemple rectangulaire constante sur toute sa longueur et qui est par exemple ici égale à 8,0 mm².

De la même manière, le balai amont (à gauche en considérant la figure 4) est relié à l'extrémité aval 40 d'un câble conducteur 18, 30 qui est de section réduite déterminée déterminée sur toute sa longueur, par exemple égale à 2,5 mm², pour constituer le shunt ou coupe-circuit.

L'extrémité amont 42 du câble conducteur 18, 30 d'alimentation du balai amont est soudée sur la patte d'extrémité amont 48 du pont inter-balais 46.

Cette patte 48 permet aussi le soudage d'un câble d'alimentation 50 de plus forte section, par exemple de l'ordre de 18 mm².

Conformément aux enseignement de l'invention, une portion 52 du pont inter-balais 46 réalisée à proximité de son extrémité aval 44, c'est à dire à proximité du shunt 18, 30 du balai aval 20, présente une section réduite déterminée par rapport à la section moyenne du pont 46.

Par exemple, la section réduite est égale à 5,8 mm².

La réduction de section est ici avantageusement obtenue à la faveur d'un trou oblong 54 formé par découpe dans la bande de tôle qui constitue le pont inter-balais 46.

Les flèches de la figure 3 illustrent le sens de diffusion de la chaleur.

Le balai amont de gauche est plus proche de la sortie de l'inducteur et sa température est ainsi inférieure à celle du balai aval de droite.

La présence du trou 54 diminue la diffusion thermique le long du pont 46 et favorise l'intervention du shunt 18, 30 associé, la fusion de celui-ci provoquant ensuite immédiatement la fusion du shunt 18, 30 du balai amont car la totalité du courant passe alors dans celui-ci.

L'obtention de la réduction de section dans la portion 52 n'est pas limitée à la réalisation d'un trou oblong 54. on peut notamment réaliser des encoches ou autres évidements dans les bords de la bande métallique constitutive du pont 46.

On peut aussi prévoir que la partie d'extrémité aval de l'élément conducteur 46 est réalisée sous la forme d'une pièce intermédiaire rapportée de section réduite, bien qu'une telle variante soit plus coûteuse et plus complexe à réaliser que toutes les solutions consistant à réaliser une ou plusieurs découpes dans la bande métallique qui constitue le pont.

## Revendications

1. Circuit d'alimentation électrique reliant une source de courant à au moins un balai (20) d'un moteur (12) électrique comportant au moins un élément conducteur amont (46) en métal découpé de section pleine sensiblement constante sur toute sa longueur et un câble aval (18) relié audit au moins un balai (20) ledit cable (18) constituant un moyen formant coupe-circuit par fusion lorsque le courant est trop important,
**caractérisé en ce que** ledit élément conducteur amont (46) comporte au moins une portion (52) de section réduite pour réduire les phénomènes de conduction thermique à travers ledit élément conducteur amont (46).

2. Circuit selon la revendication précédente, **caractérisé en ce que** ladite portion (52) de section réduite est adjacente à l'extrémité aval (44) de l'élément conducteur amont (46).

3. Circuit selon la revendication précédente, **caractérisé en ce que** l'extrémité aval (44) de l'élément conducteur amont (46) est reliée par soudage à l'extrémité amont (42) du fil conducteur (16) du câble aval (18, 30).

4. Circuit selon la revendication 1, **caractérisé en ce que** ladite portion (52) de section réduite de l'élément conducteur amont (46) comporte au moins un évidement pour en réduire la section.

5. Circuit selon la revendication précédente, **caractérisé en ce que** ladite portion (52) de section réduite de l'élément conducteur amont (46) comporte au moins un trou (54) pour en réduire la section.

6. Circuit selon la revendication 4, **caractérisé en ce que** ladite portion (52) de section réduite de l'élément conducteur amont (46) consiste en au moins une encoche.

7. Circuit selon la revendication 1, **caractérisé en ce que** ledit élément conducteur amont (46) est une bande de tôle découpée de section rectangulaire.

8. Circuit selon la revendication 1, **caractérisé en ce que** l'extrémité amont (48) de l'élément conducteur amont (46) est reliée à un autre câble (18, 30) d'alimentation d'un autre balai (20).

## Claims

1. Electric supply circuit which connects a source of current to at least one brush (20) of an electric motor (12), comprising at least one upstream conductor element (46) made of cut-out metal with a full cross-section which is substantially constant along its entire length, and a downstream cable (18) which is connected to the said at least one brush (20), the said cable (18) constituting a means which forms a circuit-breaker by fusion when the current is too great, **characterised in that** the said upstream conductor element (46) comprises at least one portion (52) with a reduced cross-section, in order to reduce the phenomena of thermal conduction through the said upstream conductor element (46).

2. Circuit according to the preceding claim, **characterised in that** the said portion (52) with a reduced cross-section is adjacent to the downstream end (44) of the upstream conductor element (46).

3. Circuit according to the preceding claim, **characterised in that** the downstream end (44) of the upstream conductor element (46) is connected by being welded to the upstream end (42) of the conductor wire (16) of the downstream cable (18, 30).

4. Circuit according to claim 1, **characterised in that** the said portion (52) with a reduced cross-section of the upstream conductor element (46) comprises at least one recess in order to reduce its cross-section.

5. Circuit according to the preceding claim, **characterised in that** the said portion (52) with a reduced cross-section of the upstream conductor element (46) comprises at least one hole (54) in order to reduce its cross-section.

6. Circuit according to claim 4, **characterised in that** the said portion (52) with a reduced cross-section of the upstream conductor element (46) consists of at least one notch.

7. Circuit according to claim 1, **characterised in that** the said upstream conductor element (46) is a strip of cut metal plate with a rectangular cross-section.

8. Circuit according to claim 1, **characterised in that** the upstream end (48) of the upstream conductor element (46) is connected to another supply cable (18, 30) of another brush (20).

## Patentansprüche

1. Elektrische Versorgungsschaltung, die eine Stromquelle mit wenigstens einer Kohlebürste (20) eines Elektromotors (12) verbindet, umfassend wenigstens ein vorderes leitendes Element (46) aus gestanztem Metall mit einem über seine ganze Länge in etwa konstanten vollen Querschnitt und ein mit der besagten wenigstens einen Kohlebürste (20) verbundenes hinteres Kabel (18), wobei das besagte Kabel (18) ein Mittel bildet, das als Sicherung durch Schmelzen dient, wenn der Strom zu stark ausfällt,
**dadurch gekennzeichnet, dass** das besagte vordere leitende Element (46) wenigstens einen Abschnitt (52) mit reduziertem Querschnitt umfasst, um die Wärmeleiterscheinungen durch das besagte vordere leitende Element (46) zu verringern.

2. Schaltung nach dem vorangehenden Anspruch, **dadurch gekennzeichnet, dass** der besagte Abschnitt (52) mit reduziertem Querschnitt dem hinteren Ende (44) des vorderen leitenden Elements (46) benachbart ist.

3. Schaltung nach dem vorangehenden Anspruch, **dadurch gekennzeichnet, dass** das hintere Ende (44) des vorderen leitenden Elements (46) durch Löten mit dem vorderen Ende (42) des Leitungsdrahts (16) des hinteren Kabels (18, 30) verbunden ist.

4. Schaltung nach Anspruch 1, **dadurch gekennzeichnet, dass** der besagte Abschnitt (52) mit reduziertem Querschnitt des vorderen leitenden Elements (46) wenigstens eine Ausnehmung umfasst, um seinen Querschnitt zu verringern.

5. Schaltung nach dem vorangehenden Anspruch, **dadurch gekennzeichnet, dass** der besagte Abschnitt (52) mit reduziertem Querschnitt des vorderen leitenden Elements (46) wenigstens ein Loch (54) umfasst, um seinen Querschnitt zu verringern.

6. Schaltung nach Anspruch 4, **dadurch gekennzeichnet, dass** der besagte Abschnitt (52) mit reduziertem Querschnitt des vorderen leitenden Elements (46) aus wenigstens einem Einschnitt besteht.

7. Schaltung nach Anspruch 1, **dadurch gekennzeichnet, dass** das besagte vordere leitende Element (46) ein gestanzter Blechstreifen mit rechteckigem Querschnitt ist.

8. Schaltung nach Anspruch 1, **dadurch gekennzeichnet, dass** das vordere Ende (48) des vorderen leitenden Elements (46)) mit einem anderen Kabel (18, 30) zur Stromversorgung einer anderen Kohlebürste (20) verbunden ist.
